# EUROPEAN PATENT APPLICATION

(11) **EP 4 847 330 A1**
(43) Date of publication of application: **02.12.2026**
(21) Application number: 26180643.4
(22) Date of filing: 22.05.2026
(51) Int. Cl.: B60T 7/20, B60L 1/00, B60L 53/14, B60T 8/17, B60T 17/22

(54) **A POWER SUPPLY CIRCUIT AND A METHOD FOR POWERING A BRAKING SYSTEM OF A TRAILER**

(30) Priority: 27.05.2025 US 202563812371 P
(71) Applicant: Carrier Corporation, Palm Beach Gardens, FL 33418 (US)
(72) Inventor: CHAPEAU, Lucas, 76520 Franqueville Saint Pierre (FR)
(74) Representative: Dehns

(57) **Abstract**

Described herein is a power supply circuit for powering a braking system (130) of a trailer (114) when a transport refrigeration unit, TRU, (120) is physically coupled to an external power source (140). The power supply circuit comprises an auxiliary power source (128), and an auxiliary power line (154) electrically connecting the braking system (130) and at least one of: a tractor (110) and/or the auxiliary power source (128). The auxiliary power line (154) is configured to supply energy to the braking system (130) from at least one of: the tractor (110) and/or the auxiliary power source (128). The auxiliary power source (128) is configured to supply the energy responsive to an absence of the energy from the tractor (110). When the energy from the tractor (110) is present, at least one diode in the auxiliary power line (154) is configured to block the energy from the auxiliary power source (128).

## Description

### BACKGROUND

The invention relates to braking systems, and more particularly, to a system and method for powering an anti-start braking system for trucks/trailers.

### SUMMARY

According to a first aspect of the invention there is provided a power supply circuit for powering a braking system of a trailer having a transport refrigeration unit (TRU) connectable to an external power source, the power supply circuit comprising an auxiliary power source, and an auxiliary power line electrically connecting the braking system and at least one of, a tractor or the auxiliary power source, wherein the auxiliary power line is configured to supply energy to the braking system from at least one of the tractor or the auxiliary power source, and wherein the auxiliary power source is configured to supply the energy to the braking system responsive to an absence of the energy from the tractor.

Optionally, the tractor and the auxiliary power source are connected in parallel and connected to the braking system via the auxiliary power line.

Optionally, the auxiliary power line comprises at least one corresponding diode disposed between the braking system and each of the tractor and the auxiliary power source.

Optionally, a resistance between the auxiliary power source and the at least one diode corresponding to the auxiliary power source is greater than a resistance between the tractor and the at least one diode corresponding to the tractor.

Optionally, the at least one diode corresponding to the auxiliary power source is configured to prevent the energy from being supplied by the auxiliary power source responsive to presence of the energy being received from the tractor.

Optionally, the auxiliary power source comprises a resistor disposed between the auxiliary power source and the at least one diode corresponding to the auxiliary power source.

Optionally, the auxiliary power source comprises a power source charger configured to direct at least a portion of energy from the external power source to the braking system.

Optionally, the auxiliary power source comprises a power storage device.

Optionally, the power storage device is configured to be charged by a power source charger.

Optionally, the braking system comprises an electronic braking system (EBS) configured to actuate a braking mechanism upon receiving a connection signal through a data line, and being powered by the auxiliary power unit or the tractor.

Optionally, the data line comprises a sensor configured to determine mechanical coupling of a charging inlet of the TRU and a charging coupler of the external power source.

Optionally, the power supply circuit further comprises a switch configured to operably open or close the power supply circuit based on whether a charging coupler of the external power source is decoupled or coupled to a charging inlet of the TRU.

Optionally, the switch comprises a sliding element configured to close the power supply circuit when abutted by a pin on at least one of, the charging coupler or the charging inlet.

Optionally, the auxiliary power source is disposed in an electronics module associated to the TRU or the external power source.

According to a second aspect of the invention there is provided a method for powering a braking system of a trailer having a TRU connectable to an external power source, the method comprising providing a power supply circuit comprising an auxiliary power line electrically connecting the braking system and at least one of, a tractor or an auxiliary power source, and selectively supplying energy to the braking system from at least one of, the tractor or the auxiliary power source, based on presence or absence of the energy being received from the tractor.

Optionally, the step of selectively supplying the energy comprises supplying the energy from the auxiliary power source to the braking system in the absence of the energy being received from the tractor, and blocking the supply of the energy from the auxiliary power source in the presence of the energy being provided by the tractor to the braking system.

Optionally, the supply of the energy from the auxiliary power source is blocked by at least one diode disposed on the auxiliary power line between the auxiliary power source and the braking system, when a resistance between the auxiliary power source and the braking system is greater than a resistance between the tractor and the braking system.

Optionally, the auxiliary power source comprises a power source charger, and the method comprises directing, by the power source charger, at least a portion of energy from the external power source to the braking system via the auxiliary power line.

Optionally, the auxiliary power source further comprises a power storage device configured to supply the energy to the braking system, and the method further comprises charging the power storage device by the power source charger.

According to a third aspect of the invention there is provided a TRU supported on a trailer, the TRU comprising an auxiliary power source connected to a power supply circuit, the power supply circuit comprising an auxiliary power line electrically connecting a braking system of the trailer and at least one of, a tractor or the power source, wherein the power source is configured to supply energy responsive to an absence of the energy from the tractor when the TRU is connected to an external power source.

The foregoing summary is illustrative only and is not intended to be in any way limiting. In addition to the illustrative aspects, embodiments, and features described above, further aspects, embodiments, features, and techniques of the invention will become more apparent from the following description taken in conjunction with the drawings.

### BRIEF DESCRIPTION OF THE DRAWINGS

The accompanying drawings are included to provide a further understanding of the invention, and are incorporated into and constitute a part of this specification. The drawings illustrate exemplary embodiments of the invention and, together with the description, serve to explain the principles of the invention.

In the drawings, similar components and/or features may have the same reference label. Further, various components of the same type may be distinguished by following the reference label with a second label that distinguishes among the similar components. If only the first reference label is used in the specification, the description is applicable to any one of the similar components having the same first reference label irrespective of the second reference label.
FIG. 1A illustrates a schematic representation of a tractor physically connectable to trailer.
FIG. 1B illustrates a schematic representation of a power supply circuit configured to power a braking system of the trailer.
FIG. 1C illustrates a block representation of the braking system.
FIG. 2 illustrates a method for powering a braking system of a trailer.

### DETAILED DESCRIPTION

The following is a detailed description of embodiments of the invention depicted in the accompanying drawings. The embodiments are in such detail as to clearly communicate the invention. However, the amount of detail offered is not intended to limit the anticipated variations of embodiments; on the contrary, the intention is to cover all modifications, equivalents, and alternatives falling within the scope of the invention as defined by the appended claims.

Various terms are used herein. To the extent a term used in a claim is not defined below, it should be given the broadest definition that persons in the pertinent art have given that term as reflected in printed publications and issued patents at the time of filing.

In the specification, reference may be made to the spatial relationships between various components and to the spatial orientation of various aspects of components as the devices are depicted in the attached drawings. However, as will be recognized by those skilled in the art after a complete reading of the specification, the components of this invention may be positioned in any desired orientation. Thus, the use of terms such as "above," "below," "upper," "lower," "first," "second," or other like terms to describe a spatial relationship between various components or to describe the spatial orientation of aspects of such components should be understood to describe a relative relationship between the components or a spatial orientation of aspects of such components.

The use of the term "about" with reference to a numerical value includes ±15% of the numerical value.

As used herein, "substantially" means largely or considerably, but not necessarily wholly, or sufficiently to work for the intended purpose. The term "substantially" thus allows for minor, insignificant variations from an absolute or perfect state, dimension, measurement, result, or the like as would be expected by a person of ordinary skill in the art, but that do not appreciably affect overall performance.

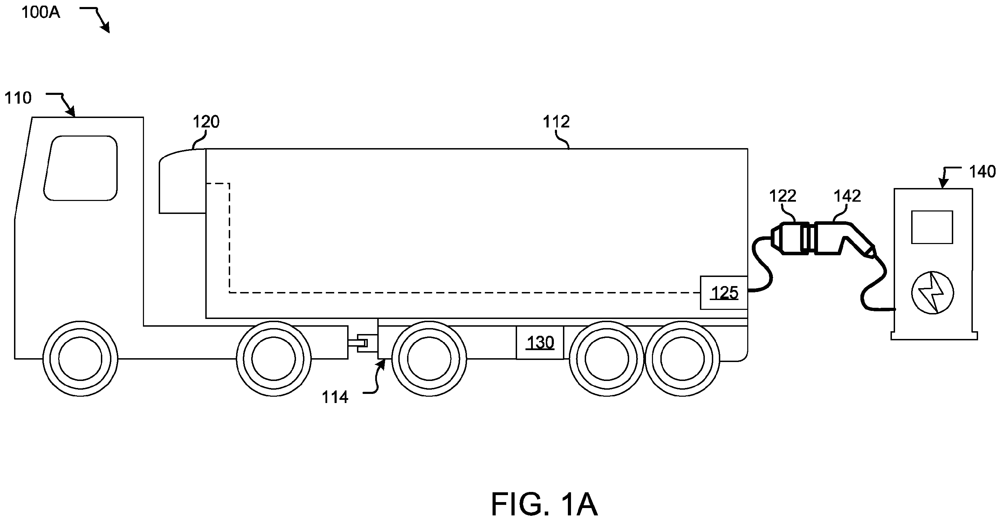

Referring to schematic representation 100A of FIG. 1A, trailer 114 having a transport refrigeration unit (TRU) 120 is shown, which may be used for cooling different products (such as perishable products, medicines, etc., for example) stored in an enclosure 112 under refrigeration. The enclosure 112 is cooled by the TRU 120. The enclosure 112 may be supported on the trailer 114. The trailer 114 may be configured to be coupled to a tractor 110.

The TRU 120 may include (or be coupled/connected to) a power storage unit 125. The power storage unit 125 may provide power to the TRU 120 (or the refrigeration system thereof) for cooling. The power storage unit 125 is charged by an external power source, such as a charging station or electric vehicle supply equipment (EVSE). The TRU 120 may be connected to the charging station/EVSE 140 via a charging connector/coupler 142 and a charging inlet 122 for receiving energy (also referred to as electromagnetic energy or electrical power). The charging coupler 142 of the EVSE 140 may be connected to the charging inlet 122 of the TRU 120 to electrically couple/connect the power storage unit 125 to the EVSE 140, which delivers electromagnetic energy and charges the power storage unit 125.

Safety regulations/practices require the trailer 114 and/or tractor 110 to be immobilized during charging, such as for providing an anti-start functionality where the trailer 114 and/or tractor 110 is prevented from moving as long as the TRU 120 is tethered to or connected to the EVSE 140.

The vehicle (such as the tractor 110) or the trailer 114 includes a braking system 130 for immobilization. The braking system 130 is to actuate brakes to hold free-moving wheels of the trailer 114. Typically, the trailer 114 is mechanically and electrically coupled/connected to the tractor 110, with the tractor 110 providing (electromagnetic) energy or electrical power to the braking system 130. However, there may be situations where the tractor 110 is physically coupled/connected to the trailer 114 but not electrically coupled/connected to the trailer 114 (or the braking system 130 thereof). For example, the trailer 114 may be temporarily connected to the tractor 110 to move the trailer 114 for short distances, such as to move the trailer 114 to the EVSE 140 from a warehouse or for maneuvering the trailer 114 within a parking lot or the warehouse. Further, the tractor 110 may be physically and electrically decoupled/disconnected from the trailer 114, such as when the TRU 120 is being charged.

There may also be situations where the trailer 114 and the tractor 110 are electrically coupled/connected, but the tractor 110 is not supplying energy/power to the TRU 120 or the braking system 130. In such situations, the braking system 130 may not be able to actuate and immobilize the trailer 114 as the braking system 130 typically received power from the tractor 110 for operation, which may cause safety concerns when the tractor 110 is not supplying any energy to the braking system 130. Existing solutions do not have means to power the braking system 130 when the trailer 114 is physically and/or electrically coupled/connected to the EVSE 140 by the charging coupler 142 and the charging inlet 122.

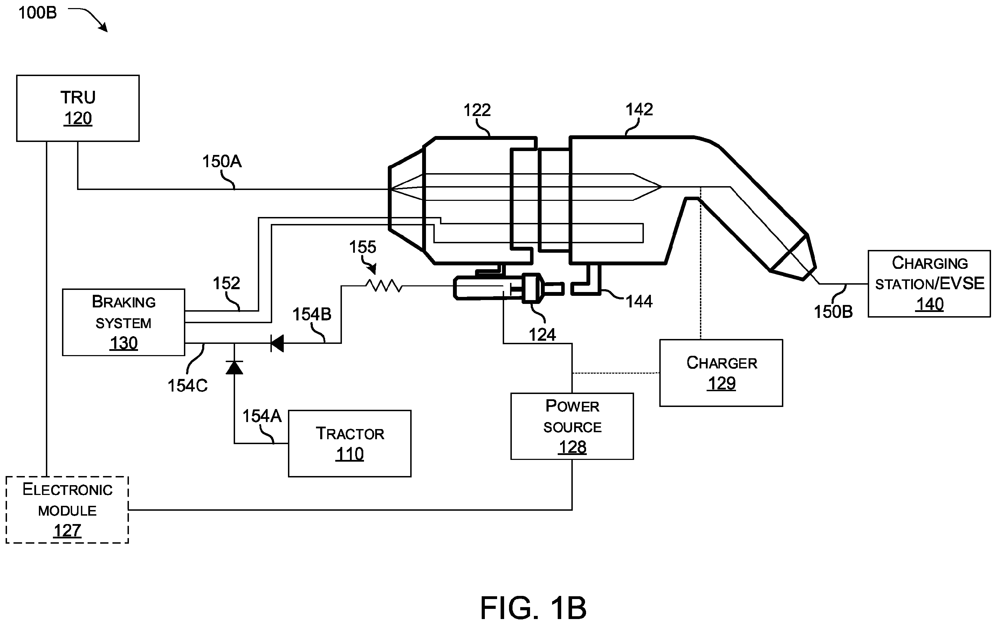

In accordance with one or more embodiments of the invention, a power supply circuit/system and a method are provided for immobilization of the trailer 114 when the charging coupler 142 is connected to the charging inlet 122 of the TRU 120. The braking system 130 may be powered to actuate and immobilize the trailer 114 by a power source (such as an auxiliary power source 128 of FIG. 1B) and/or by the tractor 110. The braking system 130 may be powered either by the power source 128 or the tractor 110, based on whether the tractor 110 is electrically coupled/connected to and is providing energy to the trailer 114, when the TRU 120 is at least physically coupled/connected to the EVSE 140 for charging. Various embodiments of the invention are described in reference to FIGs. 1B to 2.

Referring to schematic representation 100B of FIG. 1B, a circuit formed by the braking system 130, a power source 128, the tractor 110, a switch 124, an auxiliary power line 154, and/or a resistor 155 is shown. The schematic representation 100B illustrates the interconnection of various components of the circuit for providing power to the braking system 130. The schematic representation 100B is provided for illustrative purposes, and the actual physical arrangement of all components of the circuit may be suitably adapted based on requirements and constraints of the use case.

In one or more embodiments, the tractor 110 may be a vehicle configured to pull or move the trailer 114. The tractor 110 may be a powered vehicle having a prime mover (such as an engine or a motor). Examples of the tractor 110 may include a truck or a specialized yard tractor.

In one or more embodiments, the tractor 110 may be physically/mechanically connected to the trailer 114. For example, the tractor 110 may be physically coupled/connected to the trailer 114 when the trailer 114 is to be moved or transported. The tractor 110 and the trailer 114 may be connected using mechanical coupling means, such as a fifth wheel coupling, a drawbar coupling, locking pins and/or latches, and the like, but not limited thereto.

In one or more embodiments, the tractor 110 may also be electrically coupled/connected to the trailer 114. For example, the tractor 110 and the trailer 114 may be electrically coupled/connected to provide electrical power from the tractor 110 to the braking system 130 of the trailer 114, and/or to other systems of the TRU 120.

In one or more embodiments, the electrical coupling/connection may be achieved using electrical connectors and cables (not shown in FIG. 1B) that are configured to mate with corresponding electrical inlets and outlets on the tractor 110 and the trailer 114.

In one or more embodiments, the TRU 120 may include a refrigerated container 112 used to transport temperature-sensitive goods. The TRU 120 may be configured to maintain a desired temperature within the enclosure 112 of the TRU 120. The TRU 120 may be powered by the tractor 110, and/or by the power storage unit 125 disposed in or external to the TRU 120. The trailer 114 is typically equipped with free-moving wheels that allow the TRU 120 supported on the trailer 114 to be towed by the tractor 110 for movement and transportation of goods.

In one or more embodiments, the power storage unit 125 may include a battery/battery pack made of electrochemical cells. In one or more embodiments, the power storage unit 125 may include an external grid. In further embodiments, the power storage unit 125 may include mechanical, thermal, and/or chemical storage devices.

In one or more embodiments, the TRU 120 may be configured to consume power directly from an internal power source, such as the tractor 110, a generator, a fuel cell, photovoltaic cells, and the like, but not limited thereto. In one or more embodiments, the power storage unit 125 may be configured to provide (electromagnetic) energy to the refrigeration system of the TRU 120 and/or to other electrical systems of the TRU 120, and/or to the braking system 130 of the trailer 114.

In one or more embodiments, the TRU 120 may include the charging inlet 122. The charging inlet 122 may be a receptacle located on the TRU 120. The charging inlet 122 may be configured to receive the charging connector/coupler 142. The charging inlet 122 may include electrical contacts to electrically couple/connect with electrical contacts of the charging coupler 142, for transferring energy from the EVSE 140 (or other external power sources) to the power storage unit 125 of the TRU 120.

Further, the charging inlet 122 may be coupled/connected to the TRU 120 (and/or the power storage unit 125 thereof), and the charging coupler 142 may be coupled/connected to the EVSE 140 via power lines 150A and 150B, respectively. The charging inlet 122 and the charging coupler 142 may be configured to route the power lines 150A and 150B therethrough.

In one or more embodiments, the power lines 150A and 150B may include one or more wires for conducting power. When the charging coupler 142 is coupled/connected to the charging inlet 122, the power lines 150A and the power lines 150B may be electrically coupled/connected, forming a complete/closed circuit between the EVSE 140 (or an external power source) and the power storage unit 125. Electromagnetic energy/electrical power may be exchanged through the power lines 150A and 150B, for example, to charge the power storage unit 125.

In one or more embodiments, the EVSE 140 may be configured to receive (electromagnetic) energy from an external power grid. In other embodiments, the EVSE 140 may be configured to generate the (electromagnetic) energy using one or more power generation means. Examples of the power generation means may include, but are not limited to, photovoltaic panels, fuel cells, generators, and the like.

As stated, the trailer 114 may include the braking system 130 for immobilization. For safety purposes, the braking system 130 may be actuated to immobilize the trailer 114 when the charging inlet 122 of the TRU 120 is connected to the charging coupler 142 of the EVSE 140 (or any other external power source used for charging the power storage unit 125).

In one or more embodiments, the tractor 110 may be configured to provide (electromagnetic) energy to the braking system 130 of the trailer 114, which may be used by the braking system 130 to actuate brakes and immobilize the trailer 114. The tractor 110 may supply the (electromagnetic) energy through the electrical coupling/connection between the trailer 114 and the tractor 110.

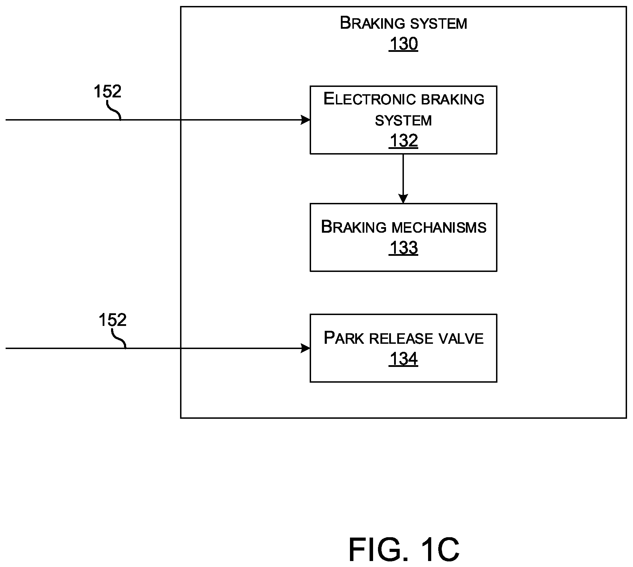

Referring to FIG. 1C, the braking system 130 may include the EBS 132. In one or more embodiments, the EBS 132 may be indicative of a controller or a control unit configured to actuate braking mechanisms of the trailer 114. The EBS 132 may be located on a chassis of the trailer 114.

In one or more embodiments, the EBS 132 may include one or more processors, a memory, and an interface (not shown). The processors may be implemented as one or more microprocessors, microcomputers, microcontrollers, digital signal processors, central processing units, graphical processing units, logic circuitries, and/or any devices that manipulate data based on operational instructions. Among other capabilities, the processor may be configured to fetch and execute computer-readable instructions stored in a memory (not shown).

The memory may store the computer-readable instructions or routines, which may be fetched and executed to create or share the data units to other elements of the EBS 132. The memory may include any non-transitory storage device including, for example, volatile memory such as Random Access Memory (RAM), or non-volatile memory such as an Erasable Programmable Read-Only Memory (EPROM), flash memory, and the like.

In one or more embodiments, the EBS 132 may be configured to receive and transmit one or more electronic control signals. In one or more embodiments, the EBS 132 may be configured to receive a connection signal from a data line 152. In one or more embodiments, the data line 152 may be routed through the charging inlet 122 and the charging coupler 142.

When the charging coupler 142 is coupled/connected to the charging inlet 122, the data line 152 may be completed/closed via electrical contacts within the charging inlet 122 and the charging coupler 142, allowing signals to be passed through the data line 152. In one or more embodiments, the connection signal may be indicative of whether the charging inlet 122 and the charging coupler 142 are physically and/or electrically coupled/connected. For example, the connection signal may include a Boolean signal, where a first state (e.g., a logical '1' or a closed circuit) indicates that the charging inlet 122 and the charging coupler 142 are coupled/connected, and a second state (e.g., a logical '0' or an open circuit) indicates that the charging inlet 122 and the charging coupler 142 are not coupled/connected. The EBS 132 may be configured to interpret the connection signal to determine whether the charging coupler 142 is connected for charging, and accordingly actuate the braking system 130 to immobilize the trailer 114.

In one or more embodiments, the data line 152 may include/be coupled/connected to one or more sensors. In one or more embodiments, the sensors may include a pressure sensor at the charging inlet 122 and/or the charging coupler 142. In such embodiments, the pressure sensor may be configured to detect whether the charging inlet and the charging coupler 142 have been coupled/connected together, and correspondingly transmit a signal to the EBS 132 indicating the connection through the data line 152. In one or more embodiments, the EBS 132 may be configured to read whether the data line 152 is closed or open, and perform an action based on the open or closed state of the data line 152.

In one or more embodiments, the data line 152 may be used to implement a safe start function, where the EBS 132 may be configured to generate a warning or automatically actuate the braking system 130 based on a signal received via the data line 152. In one or more embodiments, the signal may be generated based on a sensor input. Examples of such sensors may include, but are not limited to, speed sensors (to detect vehicle movement), proximity sensors (to detect obstacles or immediate danger), and the like, but not limited thereto. On detecting that the trailer 114 is having unsafe movement (such as moving backwards or moving towards another object), the sensors may transmit a signal through the data line 152 to the EBS 132, which may automatically actuate the braking system 130 to immobilize the trailer 114.

In one or more embodiments, the EBS 132 may be configured to interpret the connection signal received via the data line 152. Based on the interpretation of the connection signal, the EBS 132 may be configured to transmit signals to other braking mechanisms 133 of the braking system 130 to actuate the brakes and immobilize the trailer 114. The braking mechanisms 133 may be installed on chassis or wheels of the trailer 114. Examples of the braking mechanisms 133 may include, but are not limited to, electronic actuators, valves (such as pneumatic valves and park release valve 134 shown in FIG. 1C), hydraulic actuators, and/or mechanical linkages that are operatively coupled to wheel brakes of the trailer 114. In one or more embodiments, the braking mechanism 133 may include a valve configured to control air pressure in a braking line of the braking system 130. For example, the EBS 132 may control the valve to open and release air from the braking line, which may cause the brakes to activate and immobilize the trailer 114. Further, upon receiving a connection signal indicating that the charging coupler 142 is coupled/connected to the charging inlet 122, the EBS 132 may transmit an electronic control signal to an electronic actuator to apply parking brakes, or to a pneumatic valve to release air pressure in the braking lines, thereby actuating the brakes and immobilizing the trailer 114. In other embodiments, the braking mechanisms 133 may be directly powered, to actuate the braking mechanisms 133 and immobilize the trailer 114.

The EBS 132 may be provided with electromagnetic or electrical energy/power to interpret the connection signal, and transmit the electronic control signals. Power may be required for the EBS 132 to actuate the braking mechanism 133. While the EBS 132 may be provided with energy/power by the tractor 110 when the tractor 110 is coupled/connected to the trailer 114, as stated, there may be situations where the tractor 110 may not be electrically and/or physically coupled or connected to the trailer 114, but require the trailer 114 to be immobilized, such as when the TRU 120 is coupled/connected to the EVSE 140. The invention provides a circuit configured to power the braking system 130 for immobilizing the trailer 114. The circuit may allow the trailer 114 to be immobilized, even when the TRU 120 and the tractor 110 are electrically and/or physically de-coupled/disconnected, or in absence of the energy being provided by the tractor 110 to the braking system 130.

In one or more embodiments, the power supply circuit may include an auxiliary power line (formed by auxiliary power lines 154A, 154B, and 154C, and collectively referred to as auxiliary power lines 154) configured to provide power to the braking system 130. In FIG. 1B, the auxiliary power line 154A and 154B may be coupled/connected to the tractor 110 and the power source 128, respectively. The auxiliary power line 154A and 154B may meet at a junction. The auxiliary power line 154C may be routed between the junction and the braking system 130. The auxiliary power line 154 may be a wire or cable sized to handle the power requirements of the braking system 130. In one or more embodiments, a 12V power supply may be provided through auxiliary power line 154.

The circuit may be configured to supply power (i.e., supply electromagnetic energy) to the braking system 130 via at least one of, the tractor 110 and/or the power source 128 through the power line 154, when the charging inlet 122 is coupled/connected to the charging coupler 142.

In one or more embodiments, the tractor 110 may be coupled/connected to the circuit. In such embodiments, the tractor 110 may be coupled/connected to the trailer 114 through the electrical coupling mechanisms therebetween, which may also be connected to the circuit. Further, in such embodiments, the tractor 110 may be configured to supply energy to the braking system 130.

In one or more embodiments, the power source 128 may include a battery, electrochemical cells, supercapacitors, and the like, but not limited thereto. In one or more embodiments, the power source 128 may be located within the TRU 120. For instance, the power source 128 may be included within the power storage unit 125. In such embodiments, the power source 128 may include Direct Current (DC)-DC converters, voltage converters, and/or the like. In other embodiments, the power source 128 may be a dedicated battery external to the TRU 120. In further embodiments, the power source 128 may be part of a battery pack (not shown). In further embodiments, the power source 128 may be located within an electronics module 127 associated with the TRU 120.

In one or more embodiments, the electronics module 127 may be located within the TRU 120, or the enclosure 122. In other embodiments, the electronics module 127 may be distributed partly in the TRU 120 and partly in a separate enclosure. Accordingly, the auxiliary power source 128 may be partly housed in the TRU 120 and in the separate enclosure of the electronic modules 127. The electronics module 127 may be configured to electrically connect the TRU 120 and the external power source.

In one or more embodiments, the power source 128 may be configured to supply (electromagnetic/electrical) energy to the braking system 130. In such embodiments, the tractor 110 may be electrically de-coupled/disconnected from the TRU 120 and/or the braking system 130 of the trailer 114. Hence, the braking system 130 is always powered, either by the power source 128, or by the tractor 110, when the charging inlet 122 is coupled/connected to the charging coupler 142.

The circuit may be configured to operably open and/or close based on whether the charging inlet 122 and the charging coupler 142 are electrically coupled/connected to each other. In one or more embodiments, the circuit may be configured to open when the charging inlet 122 and the charging coupler 142 are de-coupled/disconnected from each other. Further, the circuit may be configured to close when the charging inlet 122 is coupled/connected to the charging connector 142.

In one or more embodiments, the charging inlet 122 and/or the charging coupler 142 may include a switch 124. The switch 124 may be configured to open or close an electrical circuit. In FIG. 1B, the switch 124 may include a push-button type switch having a sliding element configured to open or close the circuit when pushed or slid into a switch housing by an actuator pin 144. Accordingly, in one or more embodiments, the switch 124 (and the sliding element thereof) may be disposed in the charging inlet 122, and the actuator pin 144 may be disposed on the charging coupler 142, or vice versa. In other embodiments, other types of switches may also be used, such as relays, transistors, or contactors.

In an example, when the charging coupler 142 is inserted into the charging inlet 122, the actuator pin 144 may engage with the switch 124 and cause the switch 124 to close. When the switch 124 is closed, the circuit may be completed/closed, allowing energy to be supplied from the power source 128 to the braking system 130 via the auxiliary power line 154. Conversely, when the charging coupler 142 is de-coupled/disconnected from the charging inlet 122, the mechanism 144 may disengage from the switch 124, causing the switch 124 to open and de-couple/disconnect the power source 128 from the braking system 130.

In one or more embodiments, the switch 124 may be used to operably couple or de-couple the power source 128 to/from the circuit. In one or more embodiments, the switch 124 may be positioned in the auxiliary power line 154, between the power source 128 and the braking system 130.

In one or more embodiments, the circuit may include at least one diode disposed on each of the auxiliary power lines 154A and 154B. The diodes may regulate the flow of energy from the tractor 110 and/or the power source 128. For instance, when both the tractor 110 and the power source 128 are available to supply energy to the braking system 310, the diodes may prevent energy from the power source 128 from flowing through the auxiliary power line 154. By preventing the power source 128 from supplying energy when the tractor 110 is available, the energy from the power source 128 may be retained, thereby saving or storing energy for future use when the tractor 110 is unavailable.

In one or more embodiments, the resistance between the power source 128 and the corresponding diode may be greater than the resistance between the tractor 110 and the corresponding diode thereof. In such embodiments, the diode corresponding to the power source 128 may prevent energy from the power source 128 from being supplied to the braking system 130. Meanwhile, the diode associated with the tractor 110 may allow energy from the tractor 110 to flow to the braking system 130.

In one or more embodiments, at least one resistor 155 may be placed between the power source 128 and the corresponding diode. The resistor 155 may include resistance greater than that of the resistance between the tractor 110 and the corresponding diode of the tractor 110/junction/the braking system 130. The increased resistance provided by the resistor

In one or more embodiments, at least one resistor 155 may be placed between the power source 128 and the corresponding diode. The resistor 155 may include resistance greater than that of the resistance between the tractor 110 and the corresponding diode of the tractor 110/junction/the braking system 130. The increased resistance provided by the resistor 155 may ensure preferential supply of the energy from the tractor 110 to the braking system 130. In such embodiments, the diode corresponding to the auxiliary power source 128 may be configured to block the energy from the auxiliary power source 128 from being supplied to the braking system 130, when energy is available from the tractor 110.

In one or more embodiments, the power source 128 may include a power storage device or a battery, which may be charged using the energy received from the EVSE 140/external power source. In one or more embodiment, the circuit may include a power source charger 129 configured to divert at least some of the energy from the external power source to the power source 128 and/or the auxiliary power line 154B. In such embodiments, the power source 128 may be configured to charge and replenish energy in the power storage unit 125, for further operation.

In one or more embodiments, when the energy is being supplied by the EVSE 140, and the charger 129 is connected to the power source 128/auxiliary power line, the power source 128 may not charge or discharge. In one or more embodiments, the charger 129 may be configured to convert the voltage of the energy from the EVSE 140 to a voltage suitable for transmission through the auxiliary power line 154B. For example, the charger 129 may receive energy at 400V from the EVSE 140, which may be down-rated to 12V, and then supplied to the power source 128/auxiliary power line 154B. In one or more embodiments, the power source 128 may be charged when the power source 128 depletes below a maximum level or a threshold state of charge thereof.

In one or more embodiments, when the charger 129 is disconnected/de-coupled from the power source 128 or the auxiliary power line 154B, the power source 128 may be configured to discharge and supply the energy to the braking system 130 through the auxiliary power line 154.

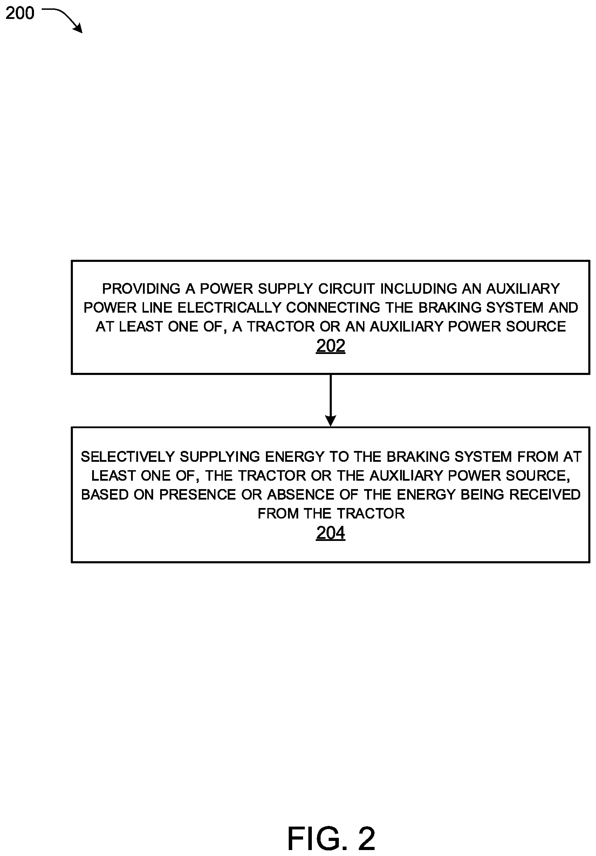

Referring to FIG. 2, a flow chart of a method 200 for powering a braking system of a trailer when a TRU is coupled/connected to an external power source is shown. The braking system may correspond to the braking system 130, the TRU to the TRU 120, the trailer to trailer 114, and/or the external power source to the EVSE 140 of FIGs. 1A and 1B.

At step 202, the method 200 includes providing a power supply circuit including an auxiliary power line electrically coupling/connected the braking system and at least one of, a tractor and/or an auxiliary power source, such as the auxiliary power line 154, the tractor 110, and/or power source 128 of FIGs. 1A and 1B.

In one or more embodiments, the auxiliary power source may be located within or external to the TRU, the trailer, and/or within the tractor. In one or more embodiments, the power supply circuit may include one or more diodes configured to regulate flow of energy from the tractor and/or the auxiliary power source to the braking system.

In one or more embodiments, the power supply circuit may include a resistor configured to provide increased resistance in a portion of the power supply circuit, such as between the auxiliary power source and the braking system, which, in conjunction with the diode, may block energy from the auxiliary power source from being supplied to the braking system when energy is available from the tractor.

At step 204, the method 200 includes selectively supplying energy to the braking system from at least one of, the tractor and/or the auxiliary power source, based on presence or absence of the energy being received from the tractor.

In one or more embodiments, the method 200 may include supplying the energy from the auxiliary power source to the braking system in the absence of energy being received from the tractor.

In one or more embodiments, the method 200 may include blocking the supply of the energy from the auxiliary power source in the presence of the energy being received by the auxiliary power line from the tractor to the braking system.

In one or more embodiments, the method 200 may include blocking the supply of energy from the auxiliary power source by at least one diode disposed on the auxiliary power line between the auxiliary power source and the braking system, by providing/increasing resistance between the auxiliary power source and the braking system is greater than the resistance between the tractor and the braking system, such as by disposing resistors.

In one or more embodiments, the auxiliary power source may include a power source charger (such as charger 129 of FIG. 1B). In one or more embodiments, the method 200 may include directing, by the power source charger, at least a portion of energy from the external power source to the braking system via the auxiliary power line.

In one or more embodiments, the auxiliary power source further includes a power storage device configured to supply the energy to the braking system. In one or more embodiments, the method 200 may include charging the power storage device by the power source charger.

In one or more embodiments, the method 200 may include receiving a connection signal from a data line (such as data line 152 of FIG. 1B) on physical coupling/connection of a charging inlet of the TRU and a charging coupler of the external power source (such as charging inlet 122 and charging coupler 142 of FIGs. 1A and 1B). In one or more embodiments, the method 200 may include actuating, by the braking system, a braking mechanism of the trailer based on the detected physical connection.

While the invention has been described with reference to exemplary embodiments, it will be understood by those skilled in the art that various changes may be made, and equivalents may be substituted for elements thereof without departing from the scope of the invention as defined by the appended claims. Modifications may be made to adapt a particular situation or material to the teachings of the invention without departing from the scope thereof. Therefore, it is intended that the invention is not limited to the particular embodiment disclosed, but that the invention includes all embodiments falling within the scope of the invention as defined by the appended claims.

In interpreting the specification, all terms should be interpreted in the broadest possible manner consistent with the context. In particular, the terms "comprises" and "comprising" should be interpreted as referring to elements, components, or steps in a non-exclusive manner, indicating that the referenced elements, components, or steps may be present, or utilized, or combined with other elements, components, or steps that are not expressly referenced. Where the specification claims refer to at least one of something selected from the group consisting of A, B, C .... and N, the text should be interpreted as requiring only one element from the group, not A plus N, or B plus N, etc.

## Claims

1. A power supply circuit for powering a braking system (130) of a trailer (114) having a transport refrigeration unit, TRU, (120) connectable to an external power source (140), the power supply circuit comprising:
an auxiliary power source (128); and
an auxiliary power line (154) electrically connecting the braking system and at least one of: a tractor (110) or the auxiliary power source,
wherein the auxiliary power line is configured to supply energy to the braking system from at least one of: the tractor or the auxiliary power source, and
wherein the auxiliary power source is configured to supply the energy to the braking system responsive to an absence of the energy from the tractor.

2. The power supply circuit of claim 1, wherein the tractor (110) and the auxiliary power source (128) are connected in parallel and connected to the braking system (130) via the auxiliary power line (154).

3. The power supply circuit of any of claims 1 or 2, wherein the auxiliary power line (154) comprises at least one corresponding diode disposed between the braking system (130) and each of the tractor (110) and the auxiliary power source (128),
optionally, wherein a resistance between the auxiliary power source and the at least one diode corresponding to the auxiliary power source is greater than a resistance between the tractor and the at least one diode corresponding to the tractor.

4. The power supply circuit of claim 3, wherein the at least one diode corresponding to the auxiliary power source (128) is configured to prevent the energy from being supplied by the auxiliary power source responsive to presence of the energy being received from the tractor (110).

5. The power supply circuit of any of claims 3 or 4, wherein the auxiliary power source (128) comprises a resistor (155) disposed between the auxiliary power source and the at least one diode corresponding to the auxiliary power source.

6. The power supply circuit of any of claims 1 to 5, wherein the auxiliary power source (128) comprises a power source charger (129) configured to direct at least a portion of energy from the external power source to the braking system (130).

7. The power supply circuit of any of claims 1 to 6, wherein the auxiliary power source (128) comprises a power storage device.

8. The power supply circuit of claim 7, wherein the power storage device is configured to be charged by a power source charger (129).

9. The power supply circuit of any of claims 1 to 8, wherein the braking system (130) comprises an electronic braking system, EBS, (132) configured to actuate a braking mechanism (133) upon receiving a connection signal through a data line (152), and being powered by the auxiliary power unit (128) or the tractor (110),
optionally, wherein the data line comprises a sensor configured to determine mechanical coupling of a charging inlet (122) of the TRU (120) and a charging coupler (142) of the external power source (140).

10. The power supply circuit of any of claims 1 to 9, further comprising a switch (124) configured to operably open or close the power supply circuit based on whether a charging coupler (142) of the external power source (140) is decoupled or coupled to a charging inlet (122) of the TRU (120),
optionally, wherein the switch (124) comprises a sliding element configured to close the power supply circuit when abutted by a pin (144) on at least one of: the charging coupler or the charging inlet.

11. The power supply circuit of any of claims 1 to 10, wherein the auxiliary power source (128) is disposed in an electronics module (127) associated to the TRU (120) or the external power source (140).

12. A method (200) for powering a braking system (130) of a trailer (114) having a transport refrigeration unit, TRU, (120) connectable to an external power source (140), the method comprising:
providing (202) a power supply circuit comprising an auxiliary power line (154) electrically connecting the braking system and at least one of: a tractor (110) or an auxiliary power source (128); and
selectively (204) supplying energy to the braking system from at least one of: the tractor or the auxiliary power source, based on presence or absence of the energy being received from the tractor.

13. The method (200) of claim 12, wherein the step of selectively supplying the energy (204) comprises:
supplying the energy from the auxiliary power source (128) to the braking system (130) in the absence of the energy being received from the tractor (110); and
blocking the supply of the energy from the auxiliary power source in the presence of the energy being provided by the tractor to the braking system, optionally, wherein the supply of the energy from the auxiliary power source is blocked by at least one diode disposed on the auxiliary power line (154) between the auxiliary power source and the braking system, when a resistance between the auxiliary power source and the braking system is greater than a resistance between the tractor and the braking system.

14. The method (200) of any of claims 12 or 13, wherein the auxiliary power source (128) comprises a power source charger, and wherein the method comprises directing, by the power source charger (129), at least a portion of energy from the external power source to the braking system (130) via the auxiliary power line (154),
optionally, wherein the auxiliary power source further comprises a power storage device configured to supply the energy to the braking system, and wherein the method further comprises charging the power storage device by the power source charger.

15. A transport refrigeration unit, TRU, (120) supported on a trailer (114), the TRU comprising:
an auxiliary power source (128) connected to a power supply circuit, the power supply circuit comprising an auxiliary power line (154) electrically connecting a braking system (130) of the trailer and at least one of: a tractor (110) or the power source,
wherein the power source is configured to supply energy responsive to an absence of the energy from the tractor when the TRU is connected to an external power source (140).
